# EUROPÄISCHE PATENTSCHRIFT

(11) **EP 1 960 151 B1**
(45) Veröffentlichungstag und Bekanntmachung des Hinweises auf die Patenterteilung: **24.07.2013**
(21) Anmeldenummer: 06818252.6
(22) Anmeldetag: 07.10.2006
(51) Int. Cl.: B23K 20/10, H01R 43/02, B23K 101/32

(54) **VERFAHREN ZUM HERSTELLEN EINER SCHWEISSVERBINDUNG ZWISCHEN ELEKTRISCHEN LEITERN MITTELS EINES ULTRASCHALLSCHWEISSVERFAHRENS**
METHOD FOR PRODUCTION OF A WELDED CONNECTION BETWEEN ELECTRICAL CONDUCTORS BY MEANS OF AN ULTRASOUND WELDING METHOD
PROCEDE POUR PRODUIRE UNE SOUDURE ENTRE DES CONDUCTEURS ELECTRIQUES PAR UN PROCEDE DE SOUDAGE PAR ULTRASONS

(30) Priorität: 10.10.2005 DE 102005048368
(43) Veröffentlichungstag der Anmeldung: 27.08.2008
(73) Patentinhaber: Schunk Sonosystems GmbH, 35435 Wettenberg (DE)
(72) Erfinder: STROH, Dieter, 35435 Wettenberg (DE)
(74) Vertreter: Stoffregen, Hans-Herbert
(86) Internationale Anmeldenummer: PCT/EP2006/009715
(87) Internationale Veröffentlichungsnummer: WO 2007/042235

(56) Entgegenhaltungen:
- WO-A-2005/042202
- DE-A1- 3 338 757
- DE-A1- 19 906 088
- US-A- 5 827 081
- US-A1- 2005 095 887
- GREITMANN M J ET AL: "PRESENT STATUS AND FUTURE PROSPECTS OF SPECIAL WELDING PROCESSES - ULTRASONIC WELDING" WELDING AND CUTTING, DVS GERMAN WELDING SOCIETY, DUSSELDORF, DE, Bd. 55, Nr. 5, 2003, Seiten 268-274, XP001177585 ISSN: 1612-3433

## Beschreibung

Die Erfindung bezieht sich auf ein Verfahren zum Herstellen von zumindest einer Schweißverbindung zwischen zumindest einem eigensteifen flächigen Träger als ersten elektrischen Leiter und zumindest einem zweiten elektrischen Leiter, wie Litze, wobei die Leiter in einen von relativ zueinander verstellbaren Begrenzungselementen umgebenen Verdichtungsraum eingebracht und in diesem durch in Ultraschallschwingung versetzter eines der Begrenzungselemente bildender Sonotrode einer Ultraschall schweißvorrichtung verschweißt werden.

Um auf einen Träger Litzen mittels Ultraschall aufzuschweißen, ist nach der DE-C-34 37 749 vorgesehen, dass die einen Verdichtungsraum seitlich begrenzenden Backen entlang des Trägers verstellbar sind, wobei der lichte Abstand der Backen auf die Breite eines in den Verdichtungsraum eintauchenden Abschnitts einer Sternsonotrode ausgerichtet wird. Der Träger selbst ist auf einer Gegenelektrode - auch Amboss genannt - abgestützt.

Der DE-Z.: Die Bibliothek der Technik, Band 108: Ultraschall-Metallschweißen, Verlag Moderne Industrie, 86895 Landsberg, 1995, Seite 43, ist eine Verschweißung zwischen einem eine U-förmige Geometrie aufweisenden Kabelschuh und elektrischen Leitern zu entnehmen. Hierzu werden Ultraschallschweißvorrichtungen benutzt, bei denen in einen Verdichtungsraum die zu verschweißende Leiter eingebracht werden, der in bekannter Weise von Abschnitten einer Sonotrode und eines Ambosses sowie seitlich zu diesen verstellbaren Backen begrenzt wird.

Aus der DE-A-199 06 088 ist ein Batterieanschlusskabel bekannt, das einen Strang aus einer Vielzahl von feinen Drähten umfasst, wobei am jeweiligen Ende des Strangs ein Kontaktstück angeschweißt ist. Hierzu werden das jeweilige Ende und eines der Kontaktstücke in einen im Querschnitt verstellbaren Verdichtungsraum einer Ultraschallschweißvorrichtung eingebracht.

Aus der WO-A-95/10866 ist ein Verfahren bekannt zum Kompaktieren und anschließenden Verschweißen von elektrischen Leitern, insbesondere von Litzen, mittels Ultraschall in einem an den Leiter angepassten in Höhe von Breite verstellbaren Verdichtungsraum, wobei die zu verschweißenden Leiter zunächst kompaktiert und sodann verschweißt werden. Dabei ist der Verdichtungsraum unabhängig vom Querschnitt der zu verschweißenden Leiter auf ein vorgegebenes Höhen-Breiten-Verhältnis einstellbar.

Ebenfalls in Höhe und Breite verstellbare Verdichtungsräume von Ultraschallschweißvorrichtungen sind der EP-B-0 143 936 oder der DE-A-37 19 083 zu entnehmen.

Die Leistungen der jeweils zum Einsatz gelangenden Ultraschalischweißvorrichtungen sind auf die maximalen Querschnitte der zu verschweißenden Leiter ausgelegt. Sollen üblicherweise z. B. Steuerleitungen mit einem Anschlussstück - auch Terminal genannt - verbunden werden, so ist die zum Einsatz gelangende Ultraschallschweißvorrichtung leistungsmäßig auf den Querschnitt der zu verschweißenden Steuerleitungen ausgelegt. Soll zusätzlich eine Masseleitung angeschlossen werden, so wird diese mit dem Terminal in konventioneller Technik durch Schrauben oder Stecken verbunden. Nachteilig einer entsprechenden Verbindung ist es, dass Übergangswiderstände auftreten können, die die Signale auf den Steuerleitungen stören können.

Aber auch dann, wenn die Leistung der Ultraschallschweißvorrichtung ausreichen sollte, auf einem Anschlussstück z. B. eine Masseleitung oder eine Batterieleitung zusammen mit einer Steuerleitung zu verschweißen, ergeben sich Nachteile dahingehend, dass eine hinreichend gute Prozessüberwachung nicht möglich ist; denn die Toleranzen, die beim Verschweißen von Leitern großer Querschnitte zulässig sind, sind häufig größer als die Querschnitte der Steuerleitungen, so dass in Folge dessen Kombinationsfehler auftreten können, die im Rahmen der Prozessüberwachung nicht feststellbar sind.

Der vorliegenden Erfindung liegt die Aufgabe zu Grunde, ein Verfahren der eingangs genannten Art so weiterzubilden, dass im gewünschten Umfang ein erster Leiter mit zweiten Leitern mittels Ultraschallschweißens verbunden werden kann, wobei der Gesamtquerschnitt der mit dem ersten elektrischen Leiter zu verbindenden zweiten elektrischen Leiter gegebenenfalls größer sein soll als der üblicherweise mit der zum Einsatz gelangenden Ultraschallschweißvorrichtung Leiter verschweißt werden können. Auch soll die Möglichkeit bestehen, einen ersten Leiter mit zweiten Leitern großer und kleiner Querschnitte prozesssicher zu verbinden, so dass insbesondere unerwünschte Übergangswiderstände nicht auftreten.

Erfindungsgemäß wird die Aufgabe im Wesentlichen dadurch gelöst, dass der erste Leiter in dem Verdichtungsraum nacheinander mit zwei oder mehreren zweiten Leitern verschweißt wird.

Erfindungsgemäß wird die Möglichkeit eröffnet, einen ersten Leiter mit zweiten Leitern eines Gesamtquerschnitts zu verschweißen, der größer ist als üblicherweise mit der verwendeten Ultraschallschweißvorrichtung Leiterquerschnitte in einem Schweißvorgang verschweißt werden können. Ferner ist aufgrund der erfindungsgemäßen Lehre sichergestellt, dass mit einem ersten Leiter zweite Leiter großer und kleiner Querschnitte prozesssicher verschweißt werden können, da die zweiten Leiter großer Querschnitte nicht gleichzeitig mit den Leitern kleiner Querschnitte verschweißt werden, so dass eine gute Prozessüberwachung erfolgen kann. Durch diese Maßnahmen ist die Möglichkeit gegeben, im gewünschten Umfang zweite Leiter mit dem ersten Leiter zu verschweißen, ohne dass ein Wechsel der Ultraschallschweißvorrichtung erfolgen muss. Es können Ultraschallschweißvorrichtungen verwendet werden, die leistungsgemäß auf den jeweiligen mit dem ersten Leiter zu verbindenden einzelnen zweiten Leiter maximalen Querschnitts ausgelegt sind, wobei eine individuelle Prozessüberwachung unter Berücksichtigung der jeweiligen Leiterquerschnitte erfolgen kann.

Von Vorteil ist das Verfahren insbesondere dann, wenn zusätzlich zu bestehenden Verbindungen zwischen ersten und zweiten Leitern ein weiterer zweiter Leiter angeschlossen werden soll, ohne dass auf die herkömmlichen Verbindungsarten wie Schrauben oder Stecken zurückgegriffen werden muss. Somit ist eine sichere und gut leitende Verbindung gewährleistet, so dass unerwünschte Übergangswiderstände, die zu Störungen führen könnten, nicht auftreten. Es kann folglich ein problemloses Verbinden von Steuerleitungen und Massekabel bzw. Batterie mit einem Anschlussstück erfolgen, wie dies bei der Verkabelung insbesondere in der Kraftfahrzeugtechnik erfolgt.

Vorzugsweise ist vorgesehen, dass bei den aufeinander folgenden Schweißvorgängen der erste Leiter relativ zu dem Verdichtungsraum verstellt wird. Vorzugsweise wird der erste Leiter zu dem Verdichtungsraum verstellt. Es besteht aber auch die Möglichkeit, die Ultraschallschweißvorrichtung, d. h. den Verdichtungsraum entlang des ersten Leiters zu verstellen, um sodann sukzessiv die zweiten Leiter mit dem ersten Leiter zu verschweißen.

Sofern der Verdichtungsraum querschnittsmäßig im erforderlichen Umfang einstellbar ist, besteht die Möglichkeit, dass zweite Leiter übereinander auf dem ersten Leiter verschweißt werden. Auch insoweit erfolgt ein sukzessives Verschweißen, indem zunächst ein zweiter Leiter mit dem ersten Leiter verschweißt und sodann ein weiterer zweiter Leiter auf den mit dem ersten Leiter verschweißten zweiten Leiter verschweißt wird und so fort. Aber auch ein gleichzeitiges Verschweißen mehrerer zweiter Leiter mit einem ersten Leiter ist möglich, wobei zumindest ein weiterer zweiter Leiter in einem gesonderten Schweißprozess mit dem ersten Leiter verschweißt wird.

Bevorzugterweise sind die zweiten Leiter mit dem ersten Leiter und/oder Gruppen von zweiten Leitern in zueinander beabstandeten Bereichen verschweißt. Dabei besteht die Möglichkeit, dass der erste Leiter aus über Stufen zueinander beabstandeten Abschnitten besteht, wobei auf den entlang der Längsrichtung des ersten Leiters verlaufenden Abschnitten die zweiten Leiter verschweißt werden.

Erfolgt das Verschweißen der zweiten Leiter auf dem ersten Leiter vorzugsweise in in dessen Längsrichtung zueinander beabstandeten Bereichen, so besteht auch die Möglichkeit, dass zwei zweite Leiter nebeneinander in einem quer zur Längsachse des ersten Leiters verlaufenden Bereich auf diesem verschweißt werden.

Das Schweißen von zweiten Leitern auf dem ersten Leiter auf gegenüberliegenden Seiten von diesem ist gleichfalls möglich.

Als ein erster zweiter Leiter können ein Massekabel oder Batteriekabel und als ein zweiter zweiter Leiter eine Steuerleitung mit dem ersten Leiter verschweißt werden.

Folglich kann die Ultraschallschweißvorrichtung leistungsmäßig derart ausgelegt werden, dass die mit dem ersten Leiter zu verschweißenden zweiten Leiter in einem Schweißvorgang insgesamt unverschweißbar wären.

Durch das nacheinander Verschweißen von zweiten Leitern mit dem ersten Leiter ergibt sich des Weiteren der Vorteil, dass die jeweils in einem Schweißvorgang zu verschweißenden zweiten Leiter mit dem ersten Leiter prozesssicher verbunden werden; denn würden z. B. Masse- bzw. Batterieleitungen, die einen Querschnitt zwischen 6 bis 35 mm² bzw. 16 bis 70 mm² aufweisen können, gleichzeitig mit Steuerleitungen, die einen Querschnitt zwischen 0,22 und 6 mm² aufweisen können, verschweißt, würden die bezüglich der Masse- bzw. Batterieleitungen berücksichtigenden Toleranzen ein fehlerhaftes Verschweißen mit den Steuerleitungen überdecken, so dass fehlerhafte Verschweißungen auftreten könnten, ohne dass diese feststellbar sind.

Des Weiteren sieht die Erfindung vor, dass bei Nutzung eines ersten Leiters mit von diesem ausgehenden Halteabschnitten wie Crimpfahnen während oder nach Verschweißen des letzten zweiten Leiters mit dem ersten Leiter die Halteabschnitte bei Ultraschallerregung der Sonotrode in Richtung der zweiten Leiter zum Fixieren dieser gebogen werden.

Es besteht auch die Möglichkeit, den Schweißbereich nach Abschluss des Schweißens mit einem Schrumpfschlauch als Isolation bzw. als Isolation und mechanische Stabilisierung zu umgeben.

Erfindungsgemäß wird die Möglichkeit geschaffen, einen ersten Leiter mit mehreren zweiten Leitern zu verschweißen, ohne dass unerwünschte Übergangswiderstände auftreten, wobei der Gesamtquerschnitt der zweiten Leiter größer ist als üblicherweise mit der verwendeten Ultraschallschweißvorrichtung verschweißbar sind. Es sind problemlos große und kleine Querschnitte durch gestufte Schweißbereiche mit optimalen Schweißparametern zu verarbeiten.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Prinzipdarstellung einer Ultraschallschweißanordnung,
- Fig. 2: einen Ausschnitt einer Ultraschallschweißvorrichtung mit zu verschweißenden ersten und zweiten Leitern,
- Fig. 3: der mit dem zweiten Leiter verschweißte erste Leiter,

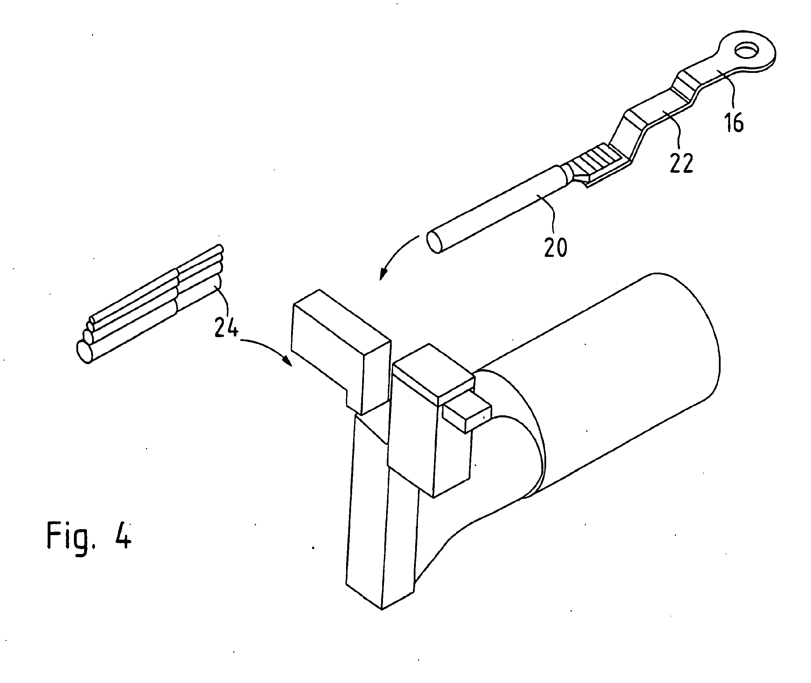

- Fig. 4: einen Ausschnitt der Ultraschallschweißvorrichtung nach Fig. 2 vor dem Verschweißen des ersten Leiters mit einem weiteren zweiten Leiter,
- Fig. 5: der mit zwei zweiten Leitern verschweißte erste Leiter,
- Fig. 6: eine perspektivische Darstellung des den Fig. 2 bis 4 zu entnehmenden ersten Leiters,
- Fig. 7: eine Draufsicht des zweiten Leiters gemäß Fig. 6,
- Fig. 8: eine Seitenansicht des zweiten Leiters gemäß Fig. 6 und 7,
- Fig. 9: eine Draufsicht auf eine weitere Ausführungsform eines zweiten Leiters,
- Fig. 10: der erste Leiter gemäß Fig. 9, der mit zwei zweiten Leitern verschweißt ist,
- Fig. 11: die ersten und zweiten Leiter gemäß Fig. 10 in Seitenansicht,
- Fig. 12: eine weitere Ausführungsform eines ersten Leiters,
- Fig. 13: der erste Leiter gemäß Fig. 12 in Seitenansicht,
- Fig. 14: der erste Leiter gemäß Fig. 12 und 13 in Draufsicht,
- Fig. 15: eine weitere Ausfühnngsform eines ersten Leiters, der mit zwei zweiten Leitern verschweißt ist, und
- Fig. 16: der mit den zweiten Leitern verschweißte erste Leiter gemäß Fig. 15 in Seitenansicht.

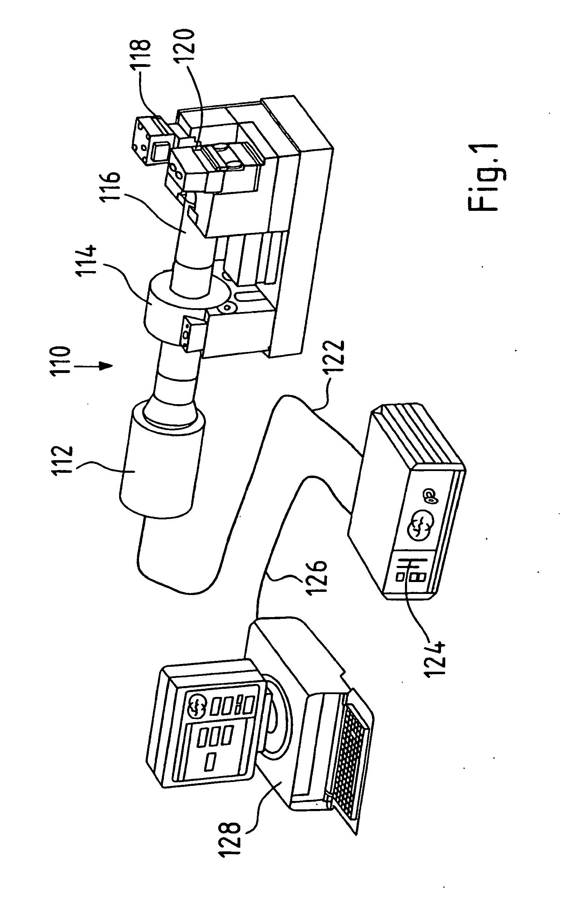

In Fig. 1 ist rein prinzipiell eine Anordnung dargestellt, mit der entsprechend nachfolgender Erläuterungen ein eigensteifer flächiger Träger als erster Leiter mit Litzen wie Kabeln oder Leitungen als elektrischer zweiter Leiter mittels Ultraschall verschweißt werden. Die Anordnung umfasst eine Ultraschallschweißvorrichtung oder -maschine 110, die in gewohnter Weise einen Konverter 112, gegebenenfalls einen Booster 114 sowie eine Sonotrode 116 umfasst. Der Sonotrode 116 bzw. einer Fläche dieser sind eine mehrteilige Gegenelektrode 118 - auch Amboss genannt - sowie ein Schieber 120 zugeordnet, wie dies der DE-C-37 19 083 oder der WO-A-95/10866 zu entnehmen ist. Die Sonotrode 116 bzw. deren Fläche, die Gegenelektrode 118 sowie der Schieber 120 begrenzen einen im Querschnitt verstellbaren Verdichtungsraum, in den die zu verschweißenden ersten und zweiten Leiter eingebracht werden.

Der Konverter 112 ist über eine Leitung 122 mit einem Generator 124 verbunden, der seinerseits über eine Leitung 126 zu einem PC 128 führt, über den eine Steuerung der Schweißprozesse erfolgt und in die Schweißparameter bzw. Querschnitt bzw. Breite der ersten und zweiten elektrischen Leiter eingegeben bzw. von der entsprechend abgespeicherte Werte abgerufen werden können.

Erfindungsgemäß wird eine entsprechende Ultraschallschweißvorrichtung benutzt, deren Leistung auf einen Querschnitt von Leitern ausgelegt ist, der kleiner als der Gesamtquerschnitt der gemäß der erfindungsgemäßen Lehre auf den ersten Leiter zu verschweißenden zweiten Leiter ist. Hierzu werden nach der Erfindung mit einem ersten Leiter mehrere zweite Leiter nacheinander verschweißt. Dadurch, dass die zweiten Leiter nacheinander mit dem ersten Leiter verschweißt werden, jeder zweite Leiter jeweils für sich jedoch einen maximalen Querschnitt aufweist, der leistungsmäßig von der Ultraschallschweißvorrichtung verschweißbar ist, ergibt sich eine Gesamtschweißverbindung, die eine sichere Verbindung zwischen den ersten und zweiten Leitern bei Minimierung des Übergangswiderstandes gewährleistet.

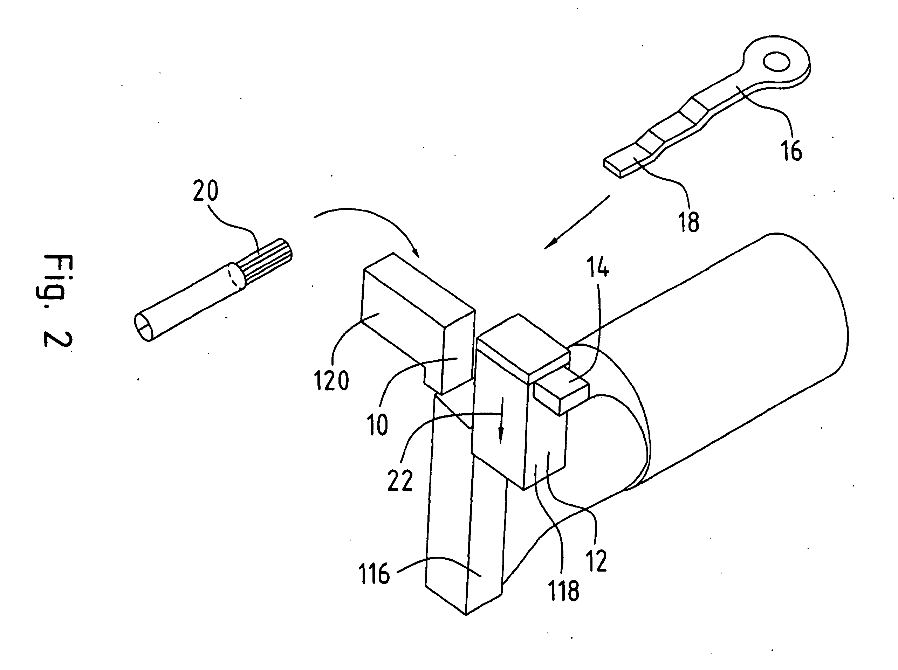

In Fig. 2 ist ein Ausschnitt der der Fig. 1 zu entnehmenden Ultraschallschweißvorrichtung zu entnehmen, wobei der Verdichtungsraum 10 von einem Abschnitt der Sonotrode 116, der zweiteiligen Gegenelektrode 118 sowie dem Seitenschieber 120 umgeben wird. Dabei besteht der zweiteilige Amboss 118 aus einem entlang der Sonotrode 116 verschiebbaren Träger 12 und einem parallel zu der von der Sonotrode 116 gebildeten Begrenzungsfläche verschiebbaren Querhaupt 14.

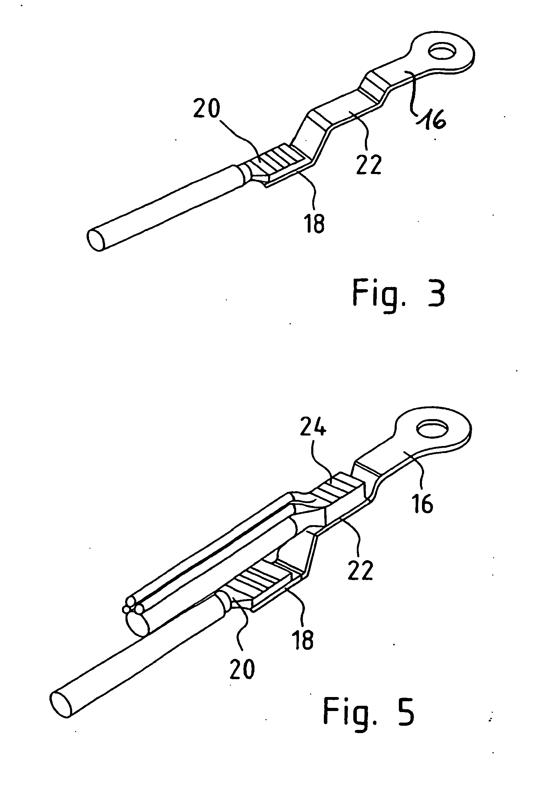

In den geöffneten Verdichtungsraum 10 wird zunächst ein erster Leiter 16 mit einem äußeren Abschnitt 18 eingebracht. Der erste Leiter 16 wird nachstehend aus Gründen der Vereinfachung als Träger oder Kontaktstück bezeichnet. Auf den Abschnitt 18 des Trägers 16 wird sodann abisoliertes Ende einer Litze 20 als zweiter elektrischer Leiter gelegt. Sodann wird der Verdichtungsraum 10 geschlossen und der Amboss 118 in Richtung der Sonotrode 116 (Pfeil 22) verstellt, um den erforderlichen Druck auf die zu verschweißenden Teile, also den Träger 16 und die Litze 20 auszuüben. Gleichzeitig ist die Sonotrode 116 in Ultraschallschwingungen erregt, um den erforderlichen Schweißvorgang durchzuführen. Nach dem Schweißen wird der Verdichtungsraum 10 geöffnet und man erhält eine Verbindung zwischen dem Träger 16 und der Litze 20, und zwar in dem Abschnitt 18 des Trägers 16, wie der Fig. 3 zu entnehmen ist. Sodann wird der Träger 16 zu dem Verdichtungsraum 10 derart verstellt, dass sich der über eine Stufe von dem Abschnitt 18 beabstandete Abschnitt 22 in dem Verdichtungsraum 10 befindet. Der Abschnitt 22 verläuft dabei parallel zu dem äußeren Abschnitt 18. Nach Positionieren des Abschnitts 22 des Trägers 16 im Verdichtungsraum 10 wird im Ausführungsbeispiel eine Gruppe von Litzen 24 als zweiter elektrischer Leiter in den Verdichtungsraum auf den Abschnitt 22 gelegt, um in zuvor beschriebener Weise eine Schweißung durchzuführen. Als Ergebnis erhält man ein Schweißteil, das der Fig. 5 zu entnehmen ist. So ist der Träger 16 in seinen Abschnitten 18, 22 jeweils mit einem zweiten elektrischen Leiter bzw. einer Gruppe von zweiten elektrischen Leitern, und zwar mit der Litze 20 und der Litzengruppe 24 verschweißt. Dabei kann der Gesamtquerschnitt der zweiten elektrischen Leiter größer sein, als üblicherweise mit der Ultraschallschweißvorrichtung elektrische Leiter verschweißt werden können.

Ultraschallschweißvorrichtungen mit einer Leistung bis 3 kW ermöglichen z. B. das Verschweißen von Litzen mit einem Gesamtquerschnitt von 35 mm². Aufgrund der erfindungsgemäßen Lehre können mit dem ersten Leiter zweite Leiter verschweißt werden, die insgesamt einen größeren Querschnitt aufweisen. Voraussetzung hiefür ist jedoch, dass in jedem Schweißvorgang mit dem ersten Leiter zweite Leiter mit einem maximalen Gesamtquerschnitt verschweißt werden, der gleich oder kleiner als 35 mm² ist, sofern man die zuvor angegebenen Werte zugrunde legt.

Vorteil des erfindungsgemäßen Verfahrens ist auch, dass mit dem ersten Leiter zweite Leiter unterschiedlicher Querschnitte nacheinander verschweißt werden, so dass für die jeweils zu verschweißenden Leiterquerschnitte eine optimale Prozessüberwachung erfolgen kann.

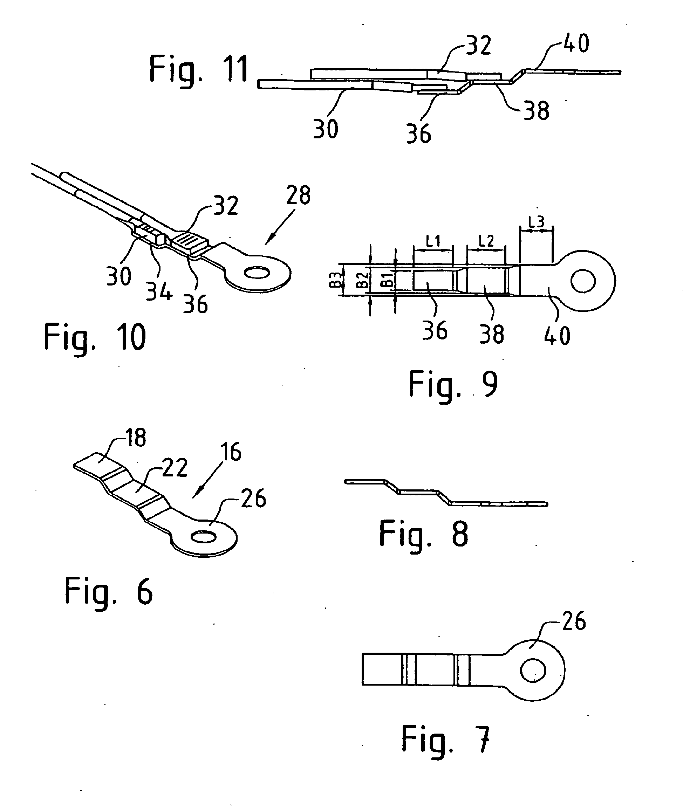

Der Träger bzw. das Kontaktstück 16 ist noch einmal in Fig. 6 in perspektivischer Darstellung dargestellt. Man erkennt den als Öse ausgebildeten mit einem Anschluss zu verbindenden vorderen Abschnitt 26 sowie die zu diesem in parallel verlaufenden Ebenen sich erstreckenden Abschnitten 18, 22. Gleiches ergibt sich aus den Darstellungen der Fig. 7 und 8. Dabei kann zusätzlich auf dem als Öse ausgebildeten Abschnitt 26 ein weiterer zweiter elektrischer Leiter geschweißt werden.

In den Fig. 9 bis 11 ist eine Variante eines entsprechenden Kontaktstückes dargestellt und mit dem Bezugszeichen 28 versehen. Der Träger bzw. das Kontaktstück 28 unterscheidet sich von dem Träger 16 dahingehend, als dass die mit Litzen 30, 32 zu verschweißenden Abschnitte 34, 36 nicht nur über Stufen zueinander beabstandet sind, sondern auch unterschiedliche Breiten aufweisen. Im Ausführungsbeispiel ist der äußere Abschnitt 36 schmaler als der mittlere Abschnitt 38, der wiederum schmaler als der vordere oder Ösenabschnitt 40 ist.

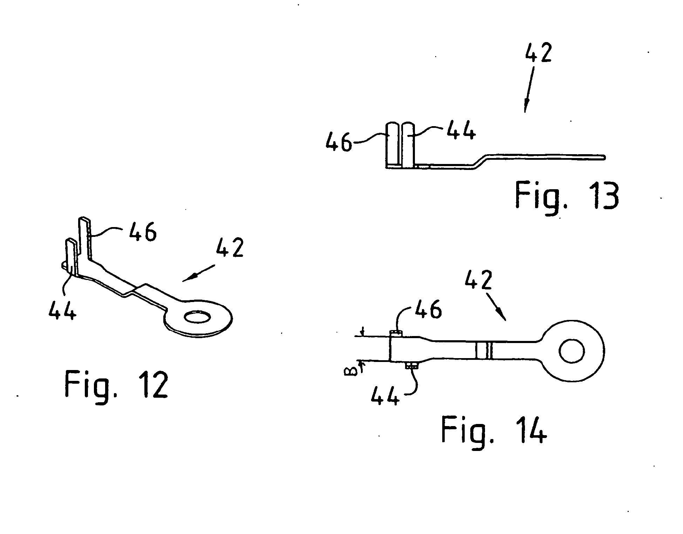

Ein den Fig. 12 bis 14 zu entnehmendes Kontaktstück 42 als erster elektrischer Leiter weist endseitig sogenannte Halte- oder Crimpfahnen 44, 46 auf, die nach dem Verschweißen von zweiten elektrischen Leitern mit dem Träger 42 in Richtung der angeschweißten zweiten elektrischen Leiter mittels Ultraschall umgebogen werden, um eine zusätzliche mechanische Fixierung zu ermöglichen. Des Weiteren besteht die Möglichkeit, dass über die Schweißstelle ein Schrumpfschlauch geschoben wird, um eine Isolation zu erreichen, die eine zusätzliche mechanische Festigkeit bietet.

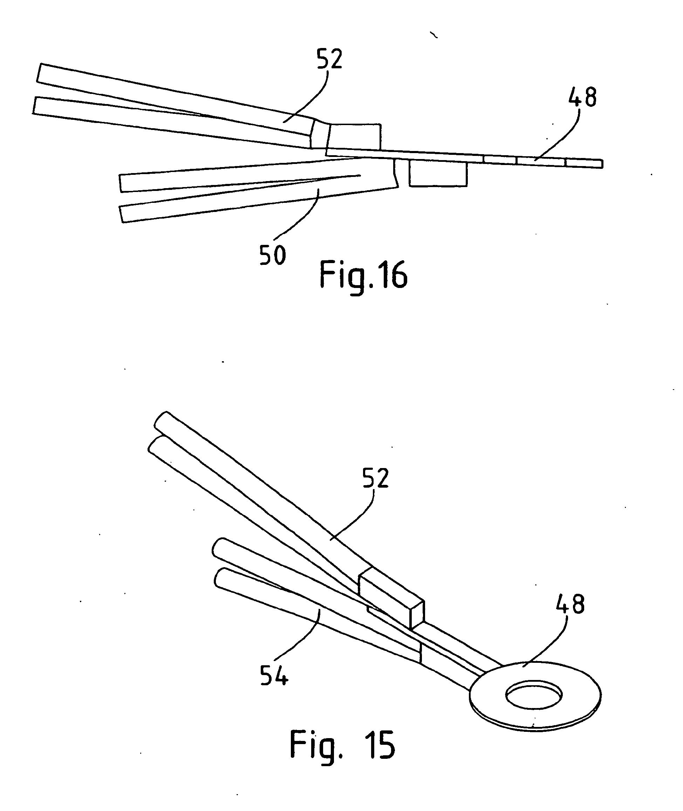

Ist in den zuvor erläuterten Ausführungsbeispielen ein erster elektrischer Leiter wie Kontaktstück, Träger oder Terminal jeweils nur auf einer Seite mit mehreren elektrischen zweiten Leitern verbunden, so besteht auch die Möglichkeit, dass zweite elektrische Leiter auf gegenüberliegenden Seiten des ersten elektrischen Leiters angeschweißt werden, wobei die zweiten elektrischen Leiter nacheinander mit dem ersten elektrischen Leiter entsprechend der erfindungsgemäßen Lehre verschweißt worden sind. So erkennt man aus den Fig. 15 und 16, dass ein Kontaktstück 48 als erster elektrischer Leiter auf seinen gegenüberliegenden Seiten jeweils mit einem zweiten elektrischen Leiter 50, 52 verbunden ist, die ihrerseits aus zwei oder mehreren untereinander verschweißten Litzen bestehen können.

## Patentansprüche

1. Verfahren zum Herstellen von zumindest einer Schweißverbindung zwischen zumindest einem eigensteifen flächigen Träger als ersten elektrischen Leiter (16,28,42,48) und zummdest einem zweiten elektrischen Leiter (20,24,30,32,50,52), wie Litze, wobei die Leiter in einen von relativ zueinander verstellbaren Begrenzungselementen (116,118,120) umgebenen Verdichtungsraum (10) eingebracht und in diesem in durch in Ultraschallschwingung versetzbarer eines der Begrenzungselemente bildender Sonotrode (116) einer Ultraschallschweißvorrichtung (110) verschweißt werden,
**dadurch gekennezeichnet,**
dass der erste Leiter (16,28,42,48) in dem Verdichtungsraum (10) nacheinander mit zwei oder mehreren zweiten Leitern (20,24,30,32,50,52) verschweißt wird.

2. Verfahren nach Anspruch 1,
**dadurch gekennzeichnet,**
**dass** bei den aufeinanderfolgenden Schweißvorgängen der erste Leiter (16,28,42,48) relativ zu dem Verdichtungsraum (10) verstellt wird.

3. Verfahren nach Anspruch 1 oder 2,
**dadurch gekennzeichnet,**
**dass** der erste Leiter (16,28,42,48) zu dem Verdichtungsraum (10) verstellt wird.

4. Verfahren nach einem der vorhergehenden Ansprüche,
**dadurch gekennzeichnet**
**dass** mit dem ersten Leiter (16,28,45,48) zweite Leiter (20,24,30,32,50,52) gleicher und/oder ungleicher Querschnitte verschweißt werden.

5. Verfahren nach einem der vorhergehenden Ansprüche,
**dadurch gekennzeichnet,**
**dass** zweite Leiter (30,32) übereinander auf dem ersten Leiter (28) verschweißt werden.

6. Verfahren nach einem der vorhergehenden Ansprüche,
**dadurch gekennzeichnet,**
**dass** die zweiten Leiter (30,32) mit dem ersten Leiter (28) in zueinander beabstandeten Bereichen (36,38) verschweißt werden.

7. Verfahren nach einem der vorhergehenden Ansprüche,
**dadurch gekennzeichnet**
**dass** die zweiten Leiter (30,32) auf Bereichen (36,38) des ersten Leiters (28) verschweißt werden, die in voneinander abweichenden Ebenen verlaufen.

8. Verfahren nach einem der vorhergehenden Ansprüche,
**dadurch gekennzeichnet**
**dass** die zweiten Leiter (30,32) in Bereichen (36,38) des ersten Leiters (28) verschweißt werden, die sich in zueinander beabstandeten und **parallel** zueinander verlaufenden Ebenen erstrecken.

9. Verfahren nach einem der vorhergehenden Ansprüche,
**dadurch gekennzeichnet,**
**dass** als ein erster zweiter Leiter ein Massekabel oder ein Batteriekabel und als ein zweiter zweiter Leiter eine Steuerungsleitung mit dem ersten Leiter (16,28,42,48) verschweißt werden.

10. Verfahren nach einem der vorhergehenden Ansprüche,
**dadurch gekennzeichnet,**
**dass** zumindest zwei zweite Leiter nebeneinander in einem quer zur Längsachse des ersten Leiters (16,28,42,48) verlaufenden Bereich auf diesem verschweißt werden.

11. Verfahren nach einem der vorhergehenden Ansprüche,
**dadurch gekennzeichnet,**
**dass** mit dem ersten Leiter (16,28,42,48) nacheinander eine Gruppe von zweiten Leitern und ein zweiter Leiter oder eine Gruppe von zweiten Leitern verschweißt werden.

12. Verfahren nach einem der vorhergehenden Ansprüche, wobei von dem ersten Leiter (42) Halteabschnitte wie Crimpfahnen (44,46) ausgeben,
**dadurch gekennzeichnet,**
**dass** während oder nach Verschweißen des letzten zweiten Leiters mit dem ersten Leiter (48) die Halteabschnitte (44,46) bei Ultraschallerregung der Sonotrode (16) in Richtung der zweiten Leiter zu deren Fixierung gebogen werden.

13. Verfahren nach einem der vorhergehenden Ansprüche,
**dadurch gekennzeichnet**
**dass** die Ultraschallschweißvorrichtung (110) leistungsgemäß derart ausgelegt ist, dass mit dem ersten Leiter (16,28,42,48) zu verschweißende zweite Leiter (20,24,30,32,50,52) in einem Schweißvorgang insgesamt unverschweißbar sind oder nicht prozesssicher verschweißbar sind.

## Claims

1. A method for producing at least one welded joint between at least one inherently rigid flat support as first electrical conductor (16, 28, 42, 48) and at least a second electrical conductor (20, 24, 30, 32, 50, 52), such as strand, said conductors are inserted into a compaction space (10) surrounded by delimiting elements (116, 118, 120) which are displaceable relative to each another, and are welded in said compaction space by a sonotrode (116) of an ultrasonic welding device (110) excitable to ultrasonic oscillation, said sonotrode forming one of the delimiting elements,
**characterized in**
**that** the first conductor (16, 28, 42, 48) is welded in the compaction space (10) successively to two or several second conductors (20, 24, 30, 32, 50, 52).

2. The method according to claim 1,
**characterized in**
**that** during the successive welding processes, the first conductor (16, 28, 42, 48) is displaced relative to the compaction space (10).

3. A method according to claim 1 or 2,
**characterized in**
**that** the first conductor (16, 28, 42, 48) is displaced to the compaction space (10).

4. A method according to one of the preceding claims,
**characterized in**
**that** to the first conductor (16, 28, 42, 48) are welded second conductors (20, 24, 30, 32, 50, 52) having equal and/or different cross sections.

5. A method according to one of the preceding claims,
**characterized in**
**that** second conductors (30, 32) are welded on top of one another onto the first conductor (28).

6. A method according to one of the preceding claims,
**characterized in**
**that** the second conductors (30, 32) are welded to the first conductor (28) in areas (36, 38) that are spaced apart from one another.

7. A method according to one of the preceding claims,
**characterized in**
**that** the second conductors (30, 32) are welded on areas (36, 38) of the first conductor (28) that run in different planes from one another.

8. A method according to one of the preceding claims,
**characterized in**
**that** the second conductors (30, 32) are welded in areas (36, 38) of the first conductor (28) that extend over levels that are spaced apart from one another and parallel to one another.

9. A method according to one of the preceding claims,
**characterized in**
**that** welded to the first conductor (16, 28, 42, 48) are a grounding cable or battery cable as a first second conductor, and a control cable as a second second conductor.

10. A method according to one of the preceding claims,
**characterized in**
**that** at least two second conductors are welded in parallel to the first conductor (16, 28, 42, 48) in an area that runs crosswise to its longitudinal axis.

11. A method according to one of the preceding claims,
**characterized in**
**that** to the first conductor (16, 28, 42, 48) are welded successively a group of second conductors and a second conductor or a group of second conductors.

12. A method according to one of the preceding claims, whereby from the first conductor (42) extend holding sections such as crimp lugs (44, 46),
**characterized in**
**that** during or after welding of the last second conductor to the first conductor (40) the holding sections (44, 46) are bend towards the second conductors by ultrasonic excitation of the sonotrode, in order to secure them.

13. A method according to one of the preceding claims,
**characterized in**
**that** the ultrasonic welding device (110) has such a power output that second conductors (20, 24, 30, 32, 50, 52) to be welded to the first conductor (16, 28, 42, 48) are not weldable altogether or are not process reliable weldable.

## Revendications

1. Procédé pour réaliser au moins un assemblage par soudure entre au moins un support mince à rigidité propre en tant que premier conducteur électrique (16, 28, 42, 48) et au moins un deuxième conducteur électrique (20, 24, 30, 32, 50, 52), tel qu'un fil multibrins, sachant que les conducteurs sont placés dans une chambre de compression (10) entourée par des éléments de délimitation (116, 118, 120) déplaçables les uns par rapports aux autres, et sont soudés dans ladite chambre par une sonotrode (116) d'une soudeuse à ultrasons (110), la sonotrode pouvant être mise en vibration ultrasonore et formant l'un des éléments de délimitation,
**caractérisé en ce**
**que** dans la chambre de compression (10), le premier conducteur (16, 28, 42, 48) est successivement soudé à deux ou plusieurs deuxièmes conducteurs (20, 24, 30, 32, 50, 52).

2. Procédé selon la revendication 1,
**caractérisé en ce**
**que** lors des opérations de soudage successives, le premier conducteur (16, 28, 42, 48) est déplacé par rapport à la chambre de compression (10).

3. Procédé selon la revendication 1 ou 2,
**caractérisé en ce**
**que** le premier conducteur (16, 28, 42, 48) est déplacé vers la chambre de compression (10).

4. Procédé selon l'une des revendications précédentes,
**caractérisé en ce**
**qu'**au premier conducteur (16, 28, 42, 48) sont soudés des deuxièmes conducteurs (20, 24, 30, 32, 50, 52) ayant des sections transversales identiques et/ou différentes.

5. Procédé selon l'une des revendications précédentes,
**caractérisé en ce**
**que** des deuxièmes conducteurs (30, 32) sont soudés les uns par-dessus les autres sur le premier conducteur (28).

6. Procédé selon l'une des revendications précédentes,
**caractérisé en ce**
**que** les deuxièmes conducteurs (30, 32) sont soudés au premier conducteur (28) dans des zones (36, 38) distantes les unes des autres.

7. Procédé selon l'une des revendications précédentes,
**caractérisé en ce**
**que** les deuxièmes conducteurs (30, 32) sont soudés sur des zones (36, 38) du premier conducteur (28) qui s'étendent dans des plans s'écartant les uns des autres.

8. Procédé selon l'une des revendications précédentes,
**caractérisé en ce**
**que** les deuxièmes conducteurs (30, 32) sont soudés dans des zones (36, 38) du premier conducteur (28) qui s'étendent dans des plans parallèles et distants les uns des autres.

9. Procédé selon l'une des revendications précédentes,
**caractérisé en ce**
**qu'**un câble de mise à la masse ou un câble de batterie en tant que premier deuxième conducteur et qu'une conduite de commande en tant que second deuxième conducteur sont soudés au premier conducteur (16, 28, 42, 48).

10. Procédé selon l'une des revendications précédentes,
**caractérisé en ce**
**qu'**au moins deux deuxièmes conducteurs sont soudés côte à côte sur le premier conducteur dans une zone s'étendant transversalement à l'axe longitudinal du premier conducteur (16, 28, 42, 48).

11. Procédé selon l'une des revendications précédentes,
**caractérisé en ce**
**qu'**au premier conducteur (16, 28, 42, 48) sont successivement soudés un groupe de deuxièmes conducteurs et un deuxième conducteur ou un groupe de deuxièmes conducteurs.

12. Procédé selon l'une des revendications précédentes, sachant que des segments de fixation, tels que des pattes de sertissage (44, 46), partent du premier conducteur (42),
**caractérisé en ce**
**que** pendant ou après le soudage du dernier deuxième conducteur au premier conducteur (40), les segments de fixation (44, 46) sont courbés en direction des deuxièmes conducteurs sous excitation ultrasonore de la sonotrode (116) afin de les fixer.

13. Procédé selon l'une des revendications précédentes,
**caractérisé en ce**
**qu'**en ce qui concerne sa puissance, la soudeuse à ultrasons (110) est dimensionnée de telle sorte que les deuxièmes conducteurs (20, 24, 30, 32, 50, 52) à souder au premier conducteur (16, 28, 42, 48) ne peuvent pas être soudés tous ensemble ou soudés de manière fiable dans leur intégralité par une seule opération de soudage.
